# EUROPEAN PATENT SPECIFICATION

(11) **EP 0 341 319 B1**
(45) Date of publication and mention of the grant of the patent: **14.09.1994**
(21) Application number: 88910112.7
(22) Date of filing: 24.11.1988
(51) Int. Cl.: G11B 15/087, G11B 27/28

(54) **DIGITAL TAPE RECORDER**
DIGITALES BANDAUFNAHMEGERÄT
ENREGISTREUR NUMERIQUE A BANDE MAGNETIQUE

(30) Priority: 27.11.1987 JP 300713/87; 27.11.1987 JP 300830/87; 27.11.1987 JP 300831/87; 03.12.1987 JP 306339/87
(43) Date of publication of application: 15.11.1989
(60) Divisional application: 93116224.2
(73) Proprietor: MATSUSHITA ELECTRIC INDUSTRIAL CO., LTD., Kadoma-shi, Osaka-fu, 571 (JP)
(72) Inventor: SHIMADA, Hiromichi, Amagasaki-shi Hyougo-ken 661 (JP)
(74) Representative: Senior, Alan Murray
(86) International application number: JP8801181
(87) International publication number: WO8905028

(56) References cited:
- EP-A- 0 187 029
- EP-A- 0 209 151
- GB-A- 2 191 885
- PATENT ABSTRACTS OF JAPAN vol. 11, no. 362 (P-640)(2809) 26 November 1987,& JP- A-62 137756 (HITACHI LTD.) 20 June 1987,
- PATENT ABSTRACTS OF JAPAN vol. 13, no. 228 (P-877)(3576) 26 May 1989,& JP-A-01
- 037747 (SANYO ELECTRIC CO.,LTD.) 08 February 1989,
- PATENT ABSTRACTS OF JAPAN vol. 13, no. 294 (P-894)(3642) 7 July 1989,& JP-A-01 073539(MATSUSHITA ELECTRIC IND CO LTD) 17 March 1989,

## Description

This invention relates to a digital tape recorder intended to facilitate the work of the user when rewriting and editing the content of the start ID recorded in a subcode area on the tape showing the start point of a program.

This invention relates to a digital tape recorder capable of independently recording the subcode such as start ID representative of the beginning of a tune afterwards into the tape in which digitized principal signals such as music have been already recorded.

Recently, in the digital tape recorder, it is realized to record the information about signals, for example, the subcode such as start ID to show the beginning of a turn simultaneously with the principal signals or while reproducing the principal signals. The start ID indicates the beginning of a tune (the start point of a program) when its content is changed from 0 to 1, and in the rotary head type digital audio tape recorder, the time to record the start ID=1 is chosen to be about 9 seconds ±1 second so as to enable rewriting in a short time, as well as to prevent overlooking if the tape runs at a high speed.

In respect of recording of the start ID=1, when the input signal level is under a specific level close to no-signal state for a specified time such as 2 or 3 seconds during recording of principal signals, it is judged to be an interval between tunes, and the start ID=1 is recorded automatically, or after the principal signals only or principal signals and start ID are recorded, only the start ID is rewritten (that is, start ID=0 or start ID=1 is recorded). Hereinafter, re-recording of start ID only is called after-recording.

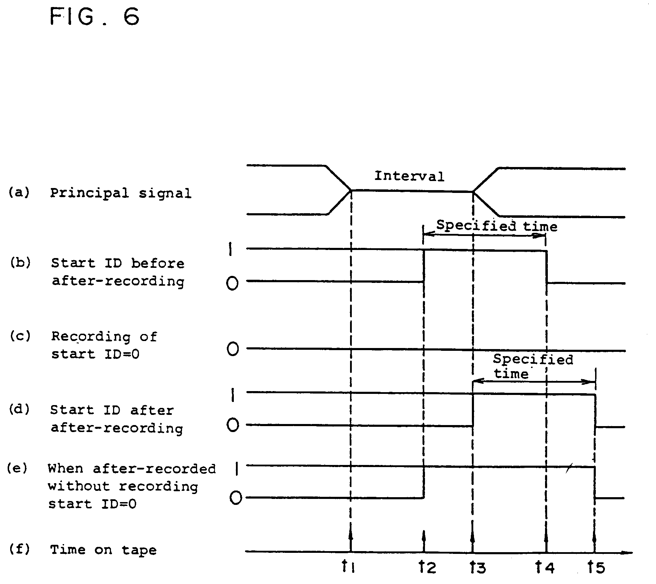

In such a digital tape recorder, when moving the position of the start ID=1 of the tape on which the start ID=1 is once recorded by a short time through after-recording, the operation is explained while referring to FIG. 6. In FIG. 6, a denotes the principal signal possessing an interval from time t₁ to time t₃, and b is the recorded state of start ID before after-recording, and the start ID=1 is recorded from an intermediate time t₂ between tunes to time t₄. In such a tape, in order to after-record the start ID for accurately searching the beginning of a tune from time t₃, once the start ID=0 is recorded as indicated by c, and the tape position of time t₃ at the beginning of a tune is accurately determined, and the start ID=1 must be recorded from time t₃ to time t₅ as indicated by d. If the start ID=1 is after-recorded from time t₃ at the beginning of a tune without recording the start ID=0, there is a state of start ID=1 from time t₂ to time t₅ as shown by e, and accurate searching is impossible, and still more in the rotary head type digital audio tape recorder, since the duration of start ID=1 is chosen to be about 9 seconds as stated above, it is not allowed to record the start ID for a time exceeding the specified time. Therefore, when after-recording the start ID, the previously recorded start ID=1 must be once changed to start ID=0, and then the start ID=1 must be recorded.

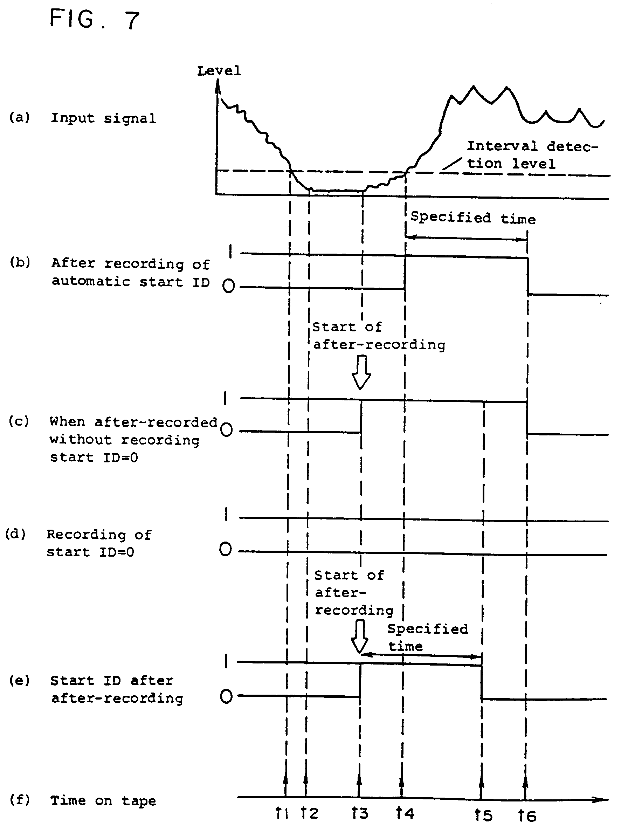

FIG. 7 is a drawing to explain the operation of a conventional digital tape recorder. As shown in FIG. 7a, when recording such a signal that is smaller than the interval detection level from time t₁ to time t₄ and having an actual interval between time t₂ and time t₃ into a PCM area mentioned below by digitizing it, in the digital tape recorder in which the start ID can be recorded automatically, the time t₄ is judged as the beginning of a tune, and the start ID=1 is recorded in the subcode area mentioned below for a specified time (about 9 seconds) up to time t₆. In order to search the beginning of the tune accurately in such recorded tape, as a result of recording of the start ID=1 for a specified time (about 9 seconds) from time t₃ to time t₅, the start ID=1 is recorded from time t₃ to time t₆ (see Fig. 7c). Accordingly, the start ID=1 is recorded for a longer time than the specified time for ordinary start ID=1. In order to prevent the start ID=1 from being recorded for a longer time than the specified time, the user of the digital tape recorder must record the ID=0 from time t₃ to time t₆ once as shown in FIG. 7d to erase the start ID=1, and then record the start ID=1 for a specified time from time t₃ as shown in FIG. 7e.

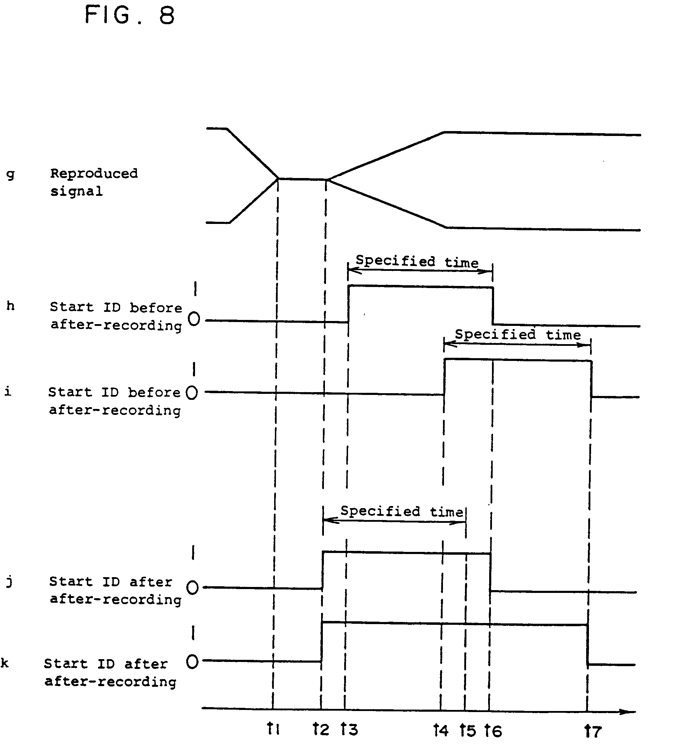

FIG. 8 is a diagram showing the relation between the principal signal and start ID. Referring now to FIG. 8, a description will be made on the case of moving the position of the start ID=1 of the tape in which the start ID=1 is once recorded by after-recording.

In FIG. 8, symbol g denotes a principal signal possessing an interval between time t₁ and time t₂, h and i are start IDs before after-recording, and the start ID=1 recorded for a specified time from time t₃ to time t₆ in h and from time t₄ to time t₇ in i. In order to search the beginning of thus recorded tape accurately, when the start ID=1 is recorded for a specified time from time t₂ to time t₅, as a result, the start ID=1 is recorded in the tape of h from time t₂ to time t₆ as indicated by i, and from time t₂ to time t₇ in the tape of i as indicated by k. Accordingly, the start ID=1 is recorded for a longer time than the specified time for recording the start ID=1 is usually recorded. In order to prevent the start ID=1 from being recorded for a longer time than the specified time, the user of the digital tape recorder must once rewrite the recorded portion of the start ID=1 into the start ID=0, and record again the start ID=1 for a specified time from time t₂.

In the conventional digital tape recorder explained above, when after-recording the start ID=1 from the beginning of a tune, the user of the digital tape recorder must first search the tape position for recording the start ID=1, and check whether the start ID=1 has been recorded for a specified time for recording the start ID=1 from the tape position, and rewrite the recorded portion of the start ID=1 into start ID=0 when the start ID=1 has been recorded, and search again the tape position for recording the start ID=1 because the tape position is moved after checking of start ID and rewriting action, then finally record the start ID=1 for a specified time (about 9 seconds) from that tape position. Thus, the user of the digital tape recorder must encounter complicated works.

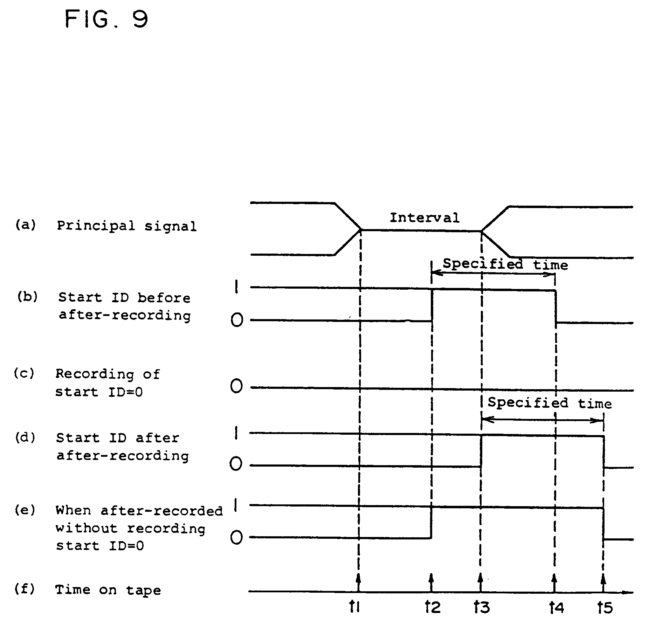

FIG. 9 is a diagram showing the relation between principal signal and start ID. By referring to FIG. 9, a description will be made on the case of moving the position of the start ID=1 in the tape in which the start ID=1 has been once recorded by a short time through after-recording.

In FIG. 9, symbol a denotes a principal signal having an interval from time t₁ to time t₃, and b is the recorded state of start ID before after-recording, and the start ID=1 is recorded from time t₂ to time t₄ within the interval of tunes. In such a tape, when after-recording the start ID in order to search the beginning of a tune accurately from time t₃, the start ID=0 is once recorded as indicated by c, and the tape position of time t₃ at the beginning of a tune is accurately obtained, and the start ID=1 must be recorded for a specified time (about 9 seconds) from time t₃ to time t₅ as shown by d. If the start ID=1 is after recorded from time t₃ at the beginning of a tune without once recording the start ID=0, the state of start ID=1 persists from time t₂ to time t₅ as shown in e, and it is impossible to search the beginning accurately, and also in the case of rotary head type digital audio tape recorder, as stated above, since the time of start ID=1 is prescribed to be about 9 seconds, and it is not allowed to record the start ID=1 over this specified time. Besides, when after-recording the start ID on a tape in which the source as shown in FIG. 20 is recorded, if (a) there is a time of nearly no-signal level close to noise level in the interval between tunes as in source 1, or (b) there is an applause or narration between tunes as in source 2 and there is no level difference between tunes and tune intervals, the user of the digital tape recorder must find the tape position for starting the recording of start ID=1, that is, the beginning of a tune, by fast-forwarding or rewinding repeatedly to check if the start ID=1 is recorded in that tape position or not, and if the start ID=1 is recorded, the user must record start ID=0, reproduce the principal signal again to find the beginning of a tune, and record the start ID=1 again.

In the hitherto digital tape recorder explained so far, when after-recording the start ID, the user of the digital tape recorder must first search the tape position for recording the start ID=1, and check whether the start ID=1 has been recorded at that tape position or not, and if the start ID=1 is recorded, the user must rewrite the recorded portion of the start ID=1 into start ID=0, and since the tape position is moved as a result, the user must search again for the tape position for recording the start ID=1, and record the start ID=1 for a specified time. Therefore, the user of the digital tape recorder was assigned with complicated works.

EP-A-187 029 discloses the recording of a program identifying number. Upon the expiration of ten seconds being necessary for recording this number a null code is written for two seconds so as to ensure that any remaining portion of the previously recorded program identifying number or program start signal included in the subcode data blocks will be erased.

This invention is devised in the light of the above problems, and it is hence a primary aim of this invention to present a digital tape recorder not requiring the operation for rewriting the previously recorded start ID=1 into start ID=0 when after-recording the start ID.

According to the invention there is provided a digital tape recorder comprising:
a re-recording switch (19) for commanding re-recording of a program start signal which represents the start of a program during a given time while the program is reproduced;
program start signal controlling means (62) for re-recording or erasing the start signal;
first time generating means (63) for setting the given time during which the start signal is re-recorded; and
a program start signal detecting means (65) for detecting whether or not the program start signal is recorded;
characterised by
second time generating means (64) for setting a time during which the program start signal is erased after the program start signal is re-recorded during the given time; and
a system controller (61) for re-recording the program start signal for the given time controlled by the first time generating means when the re-recording switch is activated, for then erasing the program start signal during the time controlled by the second time generating means, for, in cases where the program start signal detecting means detects that the program start signal is previously recorded at a tape position at which the program start signal is erased during the time controlled by the second time generating means, feeding the tape to a position at which the program start signal detecting means detects that the program start signal is not recorded, for memorizing the tape position at which the program start signal detecting means detects that the program start signal is not recorded, for rewinding the tape to a position at which the program start signal detecting means next detects that the program start signal is not recorded, and for erasing the program start signal from the tape position where the program start signal is erased during the time controlled by the second time generating means to the memorized tape position.

With the invention, when recording again the start ID=1 from the beginning of a tune by after-recording in a tape in which the start ID=1 has been recorded from the tape position slightly delayed in time from the beginning of a tune, after recording the start ID=1 for the first specified time, the start ID=0 is recorded in succession for the second time duration, and therefore, as far as the position of the start ID=1 before after-recording is a delay of within the second time duration from the beginning of the tune, the start ID=1 will not become longer than the specified time. Besides, when the position of the start ID=1 before after-recording is a delay of over the second time duration from the beginning of a tune, and if the start ID judging means judges the start ID=1 after the lapse of the second time duration, the portion of the start ID=1 is recorded again into start ID=0, a and the start ID=1 will not be recorded for a time longer than the specified time. Therefore, it is not necessary for the user of the digital tape recorder to record the previously recorded start ID=1 anew into start ID=0.

The present invention will be further described hereinafter with reference to the following description of exemplary embodiment and the accompanying drawings in which:
FIG.1 is a structural drawing of a digital tape recorder described for reference purposes;
FIG.2 is an outline drawing of signals recorded on a tape;
FIG.3 is a structural drawing of a digital tape recorder in an embodiment of the invention;
FIG.4 is a flow chart showing a part of processing of the system controller in the embodiment;
FIG.5 is a waveform diagram for explaining the operation of the embodiment;

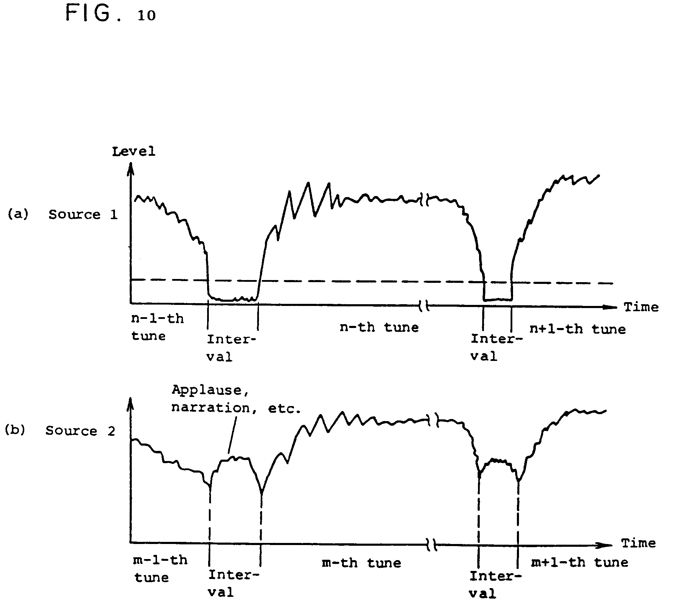

FIG.6, FIG.7, FIG.8, FIG.9 and FIG.10 are waveform diagrams for explaining the operation of conventional digital tape recorders.

Referring now to the drawings, a digital tape recorder is described for reference.

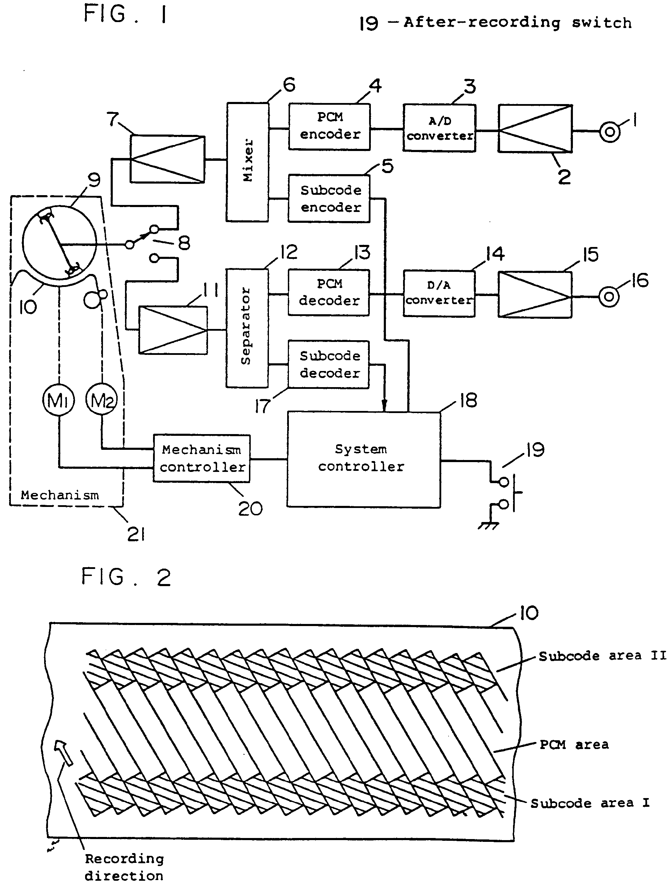

FIG.1 is a structural drawing of the digital tape recorder. FIG.2 is an outline drawing of signals recorded on a tape. In FIG. 1, numeral 1 is an input terminal, 2 is a preamplifier, 3 is an A/D converter, 5 is a PCM encoder for generating PCM signal to be recorded in PCM area in FIG. 2 by interleaving processing for exchanging the time-wise arrangement of digital signals, error correction code addition or other processing, 5 is a subcode encoder for generating subcode signals for recording the start ID, absolute time or other signal into subcode area I and subcode are II in FIG. 2, 6 is a mixer for mixing the PCM signal and the subcode signal, 7 is a recording amplifier, 8 is a switch for changing over recording and reproduction, 9 is a head mounted on the cylinder of a mechanism 21, 10 is a tape recorded in the pattern shown in FIG. 2, 11 is a reproducing amplifier, 12 is a separator for separating the PCM signal and the subcode signal, 13 is a PCM decoder for correcting the error of PCM signal or interleaving to return time-wise, 14 is a D/A converter, 15 is a line amplifier, 16 is an output terminal, 17 is a subcode decoder for obtaining a signal such as start ID from the subcode signal separated by the separator 12. Numeral 18 is a system controller for controlling the entire digital tape recorder, which delivers the subcode information to be recorded in the tape 10 such as start ID to the subcode encoder 5, and receives the subcode information reproduced from the tape 10 through the subcode decoder 17. The system controller 18 is composed of a microcomputer. Numeral 19 is an after-recording switch for commanding start of recording of start ID in subcode area I and subcode area II of the tape 10, and it is connected to the system controller 18. Numeral 20 is a mechanism controller for controlling the mechanism 21 by receiving the command from the system controller 18, and 21 is the mechanism which drives the tape 10, and records the signal into the tape 10 from the head 9 and reproduces the signal from the tape 10.

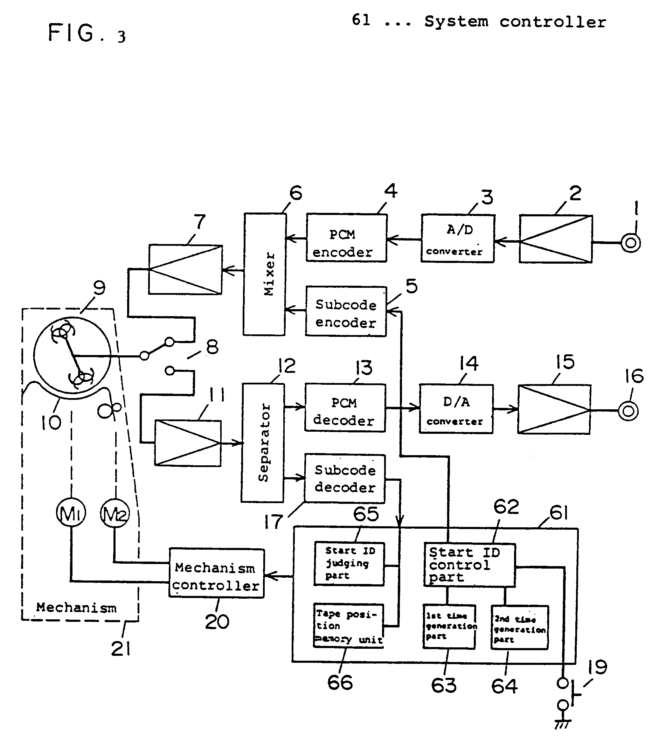

An embodiment of the invention is explained below on the basis of FIG.3, which is a structural drawing of the digital tape recorder in the embodiment of the invention. In FIG. 3, the blocks having the same operations as those in FIG. 1 are identified with the same reference numbers and are not explained again. Numeral 61 is a system controller for controlling the entire digital tape recorder. Numeral 61 is a start ID control part for controlling the recording of start ID=1 or start ID=0, 63 is a first time generation part for recording the start ID=1 for the specified time, and 64 is a second time generating part for recording the start ID=0 for a second time duration after recording the-start ID=1 for the specified time. Numeral 65 is a start ID judging part for judging whether the reproduced start ID is 1 or 0. Numeral 66 is a tape position memory unit for storing the absolute time recorded in the subcode area of the tape from the output signal of the subcode decoder as the tape position. The system controller 61 contains the essential parts from the start ID control part 62 to the tape position memory unit 66, and is composed of a microcomputer.

The operation of the thus composed digital tape recorder is explained below while referring to FIGS. 3, 2, 4 and 5.

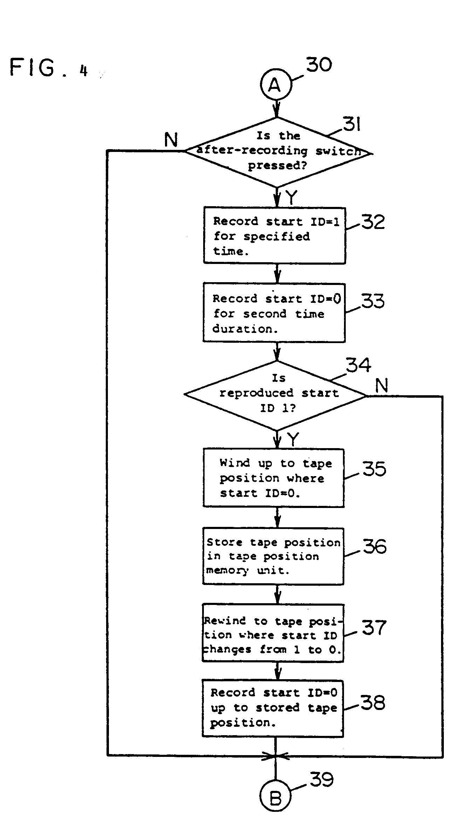

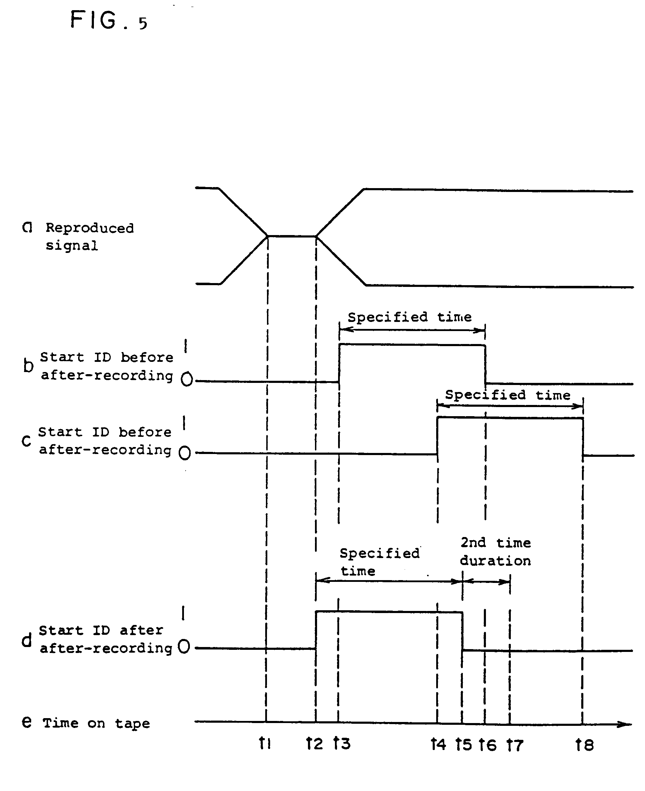

FIG. 4 is a flow chart showing a part of processing of the system controller 61, and FIG. 5 shows the relation of the principal signal (reproduced signal), the start ID as subcode, and the absolute time on the tape. Described below is the operation for recording the start ID indicated by d by after-recording by the combination of the reproduced signal indicated by a and the start ID before after-recording indicated by b, c in FIG. 5.

When after-recording the start ID=1 for a specified time from time t₂ in the interval between tunes shown in FIG. 5d in a tape in which the reproduced signal having an interval from time t₁ to time t₂ shown in FIG. 5 is recorded in the PCM area in FIG. 2 and the start ID=1 is recorded in the subcode area for a specified time from time t₃ to time t₄ as shown in FIG. 5 b or c, by pressing the after-recording switch 19 by adjusting the tape position to time t₂, the system controller 61 judges that the after-recording switch 19 has been pressed at the judging step 31 in FIG. 4, and the operation advances to the processing step 32. At the processing step 32, in order to record the start ID=1 for the specified time controlled by the first time generation part 63, the start ID control part 62 issues a command to the subcode encoder 5. Next, at the processing step 33, the start ID control part 62 issues a command to the subcode encoder 5 so as to record the start ID=0 for the second time duration controlled by the second time generation part 64. In succession, at the judging step 34, the start ID judging part 65 judges whether the start ID recorded in the subcode area of the tape 10 is 0 or 1 from the output signal from the subcode 17. If the start ID before after-recording is b in FIG. 5, after the lapse of the second time duration, that is, at time t₇, the start ID is 0, and the after-recording is terminated upon reaching the coupler B39. If the start ID before after-recording is c in FIG. 4, at time t₇, the start ID is 1, and the operation goes to the processing step 35. At the processing step 35, the start ID judging part 55 issues a command to the mechanism controller 20 so as to take up the tape 10 up to the tape position for judging the start ID=0, and at time t₈, the start ID is 0, thereby reaching the processing step 36. At the step 36, the tape position memory unit 55 stores the time information on the tape which is the output signal of the subcode decoder 17, that is, the time t₈, and the operation advances to the processing step 37. At the processing step 37, the start ID judging part 65 issues a command to the mechanism controller 20 to rewind the tape up to the tape position where the change of start ID from 1 to 0 is judged, that is, to time t₇, when the start ID becomes 0, thereby going to the processing step 38. At the processing step 38, the start ID control part 62 issues a command to the subcode encoder 5 so as to record the start ID=0 up to the tape position stored in the tape position memory unit 66, that is, up to time t₈, and when the tape position reaches the time t₈, after-recording is terminated and it reaches the coupler B39. Besides, at the processing steps 32, 33, 38, the system controller 61 issues a command to the switch 8 to select the reproducing amplifier 11 when the head 9 is tracing the PCM area of tape 10, or the recording amplifier 7 when tracing the subcode area, and a command to allow the mechanism 21 to run at a constant speed is issued to the mechanism controller 20.

The embodiment comprises the second time generation part 64 and the start ID control part 62 for recording the ID=0 for the second time duration after recording the start ID=0 for the specified time, the start ID judging part 65 for judging whether the start ID reproduced from the tape is 0 or 1, the tape position memory unit 66 for storing the tape position where the start ID is 0 by feeding the tape up to the position where the start ID is 0 when the start ID judging part 65 judges the start ID=1, and the system controller 61 for performing control so as record the portion of the start ID=1 again into start ID=0 from the termination of the second time duration till the tape position stored in the tape position memory unit 66, whereby if the start ID=1 is moved by a slight time, as far as the position of the start ID=1 before after-recording is a delay other than the second time duration, the start ID=0 is recorded for the second time duration after-recording the start ID=1 for the sepcified time, and the portion of the start ID=1 before the after-recording is left over, and the start ID=1 will not become longer than the specified time. Or, if the position of the start ID=1 before after-recording is a delay within the sum of the specified time and the second time duration, the start ID=1 is recorded for the specified time and then the start ID=0 is recorded for the second time duration, and the start ID reproduced from the tape is checked and the start ID=1 is judged by the start ID judging means, and the portion of the start ID=1 recorded before the after-recording is recorded newly as start ID=0, so that the start ID=1 will not be recorded continuously for a time longer than the specified time. Therefore, the user of the digital tape recorder does not have to operate to record the start ID=0 beforehand.

In this embodiment, meanwhile, the tape position memory unit 66 is composed so as to store the time inforamtion recorded in the subcode area of the tape, but the tape position memory unit 66 may also be designed so as to store the information obtained from the rotating speed of the reel stand of the mechanism 21 or its claculated value.

### Industrial Applicability

According to the digital tape recorder of this invention, when the user attempts to re-record the start ID=1 by using a tape in which the start ID=1 has been already recorded, the start ID=1 is recorded in the desired position on the tape for a specified time without rewriting the previously recorded start ID=1 into start ID=0 as required in the prior art, so that digital tape recorder which is very easy to use can be presented.

## Claims

1. A digital tape recorder comprising:
a re-recording switch (19) for commanding re-recording of a program start signal which represents the start of a program during a given time while the program is reproduced;
program start signal controlling means (62) for re-recording or erasing the start signal;
first time generating means (63) for setting the given time during which the start signal is re-recorded; and
a program start signal detecting means (65) for detecting whether or not the program start signal is recorded;
characterised by
second time generating means (64) for setting a time during which the program start signal is erased after the program start signal is re-recorded during the given time; and
a system controller (61), for re-recording the program start signal for the given time (t2-t5) controlled by the first time generating means when the re-recording switch is activated, for then erasing the program start signal during the time (t5-t7) controlled by the second time generating means, for, in cases where the program start signal detecting means detects that the program start signal is previously recorded at a tape position at which the program start signal is erased during the time controlled by the second time generating means, feeding the tape to a position (t8) at which the program start signal detecting means detects that the program start signal is not recorded, for memorizing the tape position at which the program start signal detecting means detects that the program start signal is not recorded, for rewinding the tape to a position (t7) at which the program start signal detecting means next detects that the program start signal is not recorded, and for erasing the program start signal from the tape position where the program start signal is erased during the time controlled by the second time generating means to the memorized tape position.

## Patentansprüche

1. Digitales Bandaufnahmegerät, mit:
einem Wiederaufnahmeschalter (19) zum Befehlen einer Wiederaufnahme eines Programmstartsignals, das den Start eines Programms während einer gegebenen Zeit darstellt, während das Programm wiedergegeben wird;
einer Programmstartsignal-Steuereinrichtung (62) zum Wiederaufnehmen oder Löschen des Startsignals;
einer ersten Zeiterzeugungseinrichtung (63) zum Einstellen der gegebenen Zeit, während der das Startsignal wiederaufgenommen wird; und
einer Programmstartsignal-Erfassungseinrichtung (65) zum Erfassen, ob das Programmstartsignal aufgenommen ist oder nicht;
**gekennzeichnet durch**
eine zweite Zeiterzeugungseinrichtung (64) zum Einstellen einer Zeit, während der das Programmstartsignal gelöscht wird, nachdem das Programmstartsignal während der gegebenen Zeit wiederaufgenommen ist; und
eine Systemsteuereinheit (61) zum Wiederaufnehmen des Programmstartsignals für die gegebene Zeit (t2-t5), was durch die erste Zeiterzeugungseinrichtung gesteuert wird, wenn der Wiederaufnahmeschalter aktiviert ist, dann zum Löschen des Programmstartsignals während der durch die zweite Zeiterzeugungseinrichtung gesteuerten Zeit (t5-t7), zum Transportieren des Bandes auf eine Position (t8), bei der die Programmstartsignal-Erfassungseinrichtung erfaßt, daß das Programmstartsignal nicht aufgenommen ist, falls die Programmstartsignal-Erfassungseinrichtung erfaßt, daß das Programmstartsignal zuvor auf einer Bandposition aufgenommen ist, auf der das Programmstartsignal während der durch die zweite Zeiterzeugungseinrichtung gesteuerten Zeit gelöscht wird, zum Speichern der Bandposition, bei der die Programmstartsignal-Erfassungseinrichtung erfaßt, daß das Programmstartsignal nicht aufgenommen ist, zum Zurückspulen des Bandes auf eine Position (t7), bei der die Programmstartsignal-Erfassungseinrichtung als nächstes erfaßt, daß das Programmstartsignal nicht aufgenommen ist, und zum Löschen des Programmstartsignals ab der Bandposition, auf der das Programmstartsignal während der durch die zweite Zeiterzeugungseinrichtung gesteuerten Zeit gelöscht wird, bis zur gespeicherten Bandposition.

## Revendications

1. Enregistreur numérique à bande magnétique comprenant :
un commutateur (19) de ré-enregistrement pour commander le ré-enregistrement d'un signal de lancement de programme qui représente le lancement d'un programme durant un temps donné pendant que le programme est reproduit;
un moyen (62) de commande de signal de lancement de programme pour ré-enregistrer ou effacer le signal de lancement;
un premier moyen (63) de génération de temps pour établir le temps donné durant lequel le signal de lancement est ré-enregistré; et
un moyen (65) de détection de signal de lancement de programme pour détecter si le signal de lancement a ou n'a pas été enregistré;
caractérisé par :
un second moyen (64) de génération de temps pour établir un temps durant lequel le signal de lancement de programme est effacé après que le signal de lancement de programme a été ré-enregistré pendant le temps donné; et
un dispositif (61) de commande de système pour ré-enregistrer le signal de lancement de programme pendant le temps donné (t2-t5) commandé par le premier moyen de génération de temps quand le commutateur de ré-enregistrement est activé, pour effacer ensuite le signal de lancement de programme durant le temps (t5-t7) commandé par le second moyen de génération de temps, pour, dans le cas où le moyen de détection de signal de lancement de programme détecte que le signal de lancement de programme a été enregistré antérieurement à une position de la bande où le signal de lancement de programme a été effacé durant le temps commandé par le second moyen de génération de temps, avancer la bande jusqu'à une position (t8) où le moyen de détection de signal de lancement de programme détecte que le signal de lancement de programme n'a pas été enregistré, pour mémoriser la position de la bande où le moyen de détection de signal de lancement de programme détecte que le signal de lancement de programme n'a pas été enregistré, pour ré-enroulé la bande jusqu'à une position (t7) à laquelle le moyen de détection de signal de lancement de programme suivant détecte ensuite que le signal de lancement de programme n'a pas été enregistré, et pour effacer le signal de lancement de programme depuis la position où le signal de lancement de programme a été effacé durant le temps commandé par le second moyen de génération de temps jusqu'à la position de bande mémorisée.
